# EUROPEAN PATENT SPECIFICATION

(11) **EP 1 266 745 B1**
(45) Date of publication and mention of the grant of the patent: **02.02.2005**
(21) Application number: 02254191.6
(22) Date of filing: 14.06.2002
(51) Int. Cl.: H02J 7/00, B29C 65/34, H05B 3/00

(54) **Power source for electrofusion operations**
Stromversorgung für Elektroschweissarbeit
Source d'alimentation pour des opérations d'éléctrosoudage

(30) Priority: 15.06.2001 GB 0114640
(43) Date of publication of application: 18.12.2002
(73) Proprietor: Glynwed Pipe Systems Limited, Bretfield Court, Dewsbury WF12 9DB (GB)
(72) Inventor: Walsworth, Antony, Dewsbury WF12 9DB (GB)
(74) Representative: Pawlyn, Anthony Neil

(56) References cited:
- EP-A- 0 437 149
- DE-A- 1 540 756

## Description

This invention concerns improvements in and relating to electrofusion operations, particularly, but not exclusively, in relation to electrofusion for pipelines and other conduits.

Electrofusion, for example, is often used to connect lengths of plastics pipe together and/or to join components or fittings, such as reducers, to pipes. The operation basically passes a current through a fitting to generate heat by resistance heating and so partially melt the plastics forming the fitting. Upon cooling a joint is formed. Pipeline systems using this process are commonly found in the utility industries. Wherever they are used it is important that the joint is formed correctly to give proper and long lasting operation.

Presently such operations are carried out using AC power supplies in all real life systems. The AC power supply may be from the mains where that is accessible. In many real life case, such as installation of pipelines in a trenches, access to mains electricity is not available. In such cases, internal combustion driven generators are used to provide the AC power source to the electrofusion control unit as they are the most readily available semi-portable such power source.

Generators, however, do present problems as they are substantial units which add purchase and running costs to an operation, require regular skilled maintenance and cannot readily be conveyed to all situations were operators would like to use them.

DE 1540756 is an electrofusion power supply having the pre-characterising features of the claimed invention.

The present invention seeks to provide an effective form of electrofusion power supply which is highly portable, offers low maintenance costs and is small. The present invention also seeks to provide useful and effective power outputs from highly portable supplies.

According to a first aspect of the invention we provide an electrofusion power supply, the power supply comprising:-
a DC power source which provides a DC input of a first voltage to a control unit, the control unit providing a DC output of a second voltage, the control unit being electrically connected, in use, to electrical connectors, the electrical connectors being connected to a first component to be joined to one or more other components by electrofusion,
characterised in that the control unit includes a converter, a transformer, a rectifier and a bypass circuit, the converter being connected to the primary winding of the transformer and applying a varying current input to the primary winding of the transformer, the secondary winding of the transformer being connected to the rectifier, the rectifier providing the DC output, the bypass circuit connecting the DC input to the output prior to the rectifier.

The first aspect of the invention may include one or more of the following features or possibilities.

The voltage source is preferably one or more batteries, ideally of rechargeable form. The battery or batteries may be 12V batteries, for instance car batteries. Two or more batteries may be connected in series to form the voltage source. Preferably the voltage source weighs less than 10kg in total. The voltage source may be formed by connecting a number of discrete components. Preferably the discrete components of the voltage source weight less than 5kg each.

The first voltage may be between 8 and 20V, preferably 12V +/- 10%.

The input DC current provided by the power source, prior to splitting into first and second portions, the first voltage, is preferably provided by a power source of between 32V and 40V and ideally 36V +/- 10%. Whilst an intended power source voltage may be provided, the invention is able to accommodate significant input voltage variations whilst providing a substantially constant output.

Preferably the power source is connected to the control unit by one or more electrical connections. The electrical connections may be releasably, for instance at the power source and/or at the control unit. The power source and control unit may be provided as a common unit. Internal, preferably releasable, connections may be provided in such a case.

The control unit may allow manual and/or automatic setting of a voltage and/or current and/or duration of power supply to the first component. The control unit may be provided with a user operable interface to specify one or more conditions of the electrofusion, either directly (i.e. voltage) or indirectly (i.e. first component type). The control unit may provide a log of the electrofusion operation performed on a particular first component and/or at a particular location. The control unit may provide a user operable interface for starting an electrofusion and/or stopping an electrofusion.

The second voltage may be between 32 and 50V, preferably between 36 and 44V and ideally 40V +/- 1%. Preferably these ranges encompass the selected voltage. Preferably the voltage varies relative to the selected voltage by less than 1.2%, ideally less than 1%, with time.

The output DC current, from the rectifier, is preferably between 5 amps and 14.5 amps. Preferably these ranges encompass the selected current. Preferably the current varies relative to the selected current by less than 2%, ideally less than 1%, with time.

Preferably the control unit is connected to the first component by one or more electrical connections. The electrical connections may be releasably, for instance at the power source and/or at the first component.

The first component may include couplers, reducers, tees, tapping tees, elbows, saddles or other electrofusion fittings. The first component may be selected from two or more different sizes and/or manufacturers and/or formation materials.

The one or more other components may be one or more pipe or other conduits. The one or more other components may be selected from amongst different size and/or diameter components.

In a preferred embodiment the converter preferably includes a switching unit and/or the varying of current input to the primary winding of the transformer is provided due to a switching unit. Preferably the switching system has an open state and a closed state. Preferably in the closed state the DC input and/or the output from the converter is fed to the primary coil of the transformer. Preferably in the open state no input is fed to the primary coil of the transformer. The switching system may be a solid state switch. The switching system may include a PWM controller IC. Preferably the proportion of the time the switch spends in the closed state controls the output power. Ideally the greater the proportion the greater the power. Preferably the frequency of switching between open and closed states is at least 150kHz more preferably at least 200kHz and ideally at least 220kHz. The frequency of switching may be between 175kHz and 300kHz, more preferably between 225 and 260kHz. Other frequencies may be used to account for variations in transformer core size, core material and input voltage. The frequency may be variable. The switch may be controlled by and / or be a transistor. Preferably the transistor is controlled by a pulse width modulation device.

In another embodiment of the invention the converter may convert the DC input to an AC feed to the primary winding of the transformer, for instance a sinusoidal feed. The rectifier preferably provides AC to constant voltage DC rectification in this embodiment.

In a further embodiment of the invention the converter may convert the DC input to an AC feed to the primary winding of the transformer of alternating polarity square wave form. The rectifier preferably provides square wave to constant voltage DC rectification in this embodiment.

The transformer is preferably a voltage step down converter. Preferably the primary winding has more windings than the secondary winding. A ratio of between 5:1 and 2:1 may be provided, preferably a ratio of 3:1.

In the preferred embodiment of the invention, the bypass may be connect the DC input to a connection leading to the secondary winding of the transformer and/or to the secondary winding directly, for instance at an intermediate location, particularly the mid-point thereof.

In the another and/or in the further embodiment of the invention the bypass preferably connects the DC input to an intermediate location, ideally the mid point, on the secondary winding of the transformer.

In the preferred embodiment of the invention, preferably the rectifier is formed by a first diode connected to one side, ideally the raised potential side, of the secondary winding.

In the another and/or further embodiment of the invention, the rectifier is preferably formed by a first diode connected to one side of the secondary winding, a second diode connected to the other side of the secondary winding, both diodes being connected such that the forward direction is away from the secondary winding. Preferably the outputs from both diodes are combined and pass through an inductor.

Preferably a capacitor is connected across the DC output from the rectifier. Preferably the current output is filtered.

The first portion of the DC input current may be between 7.5% and 17.5% of the total input DC power and ideally 12% +/-1%.

The second portion of the DC input power is preferably the remainder of the DC input power which is not fed to the DC to DC converter. The second portion of the DC input power may be between 82.5% and 92.5% of the input DC current, and normally 87.5% +/-1%.

According to a second aspect of the invention we provide a control unit for electrofusion, characterised in that the control unit includes a converter, a transformer, a rectifier, a bypass circuit and circuitry, the circuitry connecting a DC input to the converter, connecting the varying current output from the converter to a primary winding of the transformer, connecting the output from the secondary winding of the transformer to a rectifier, connecting the output from the rectifier to the output, the bypass circuit connecting the DC input to the DC output prior to the rectifier.

The second aspect of the invention may include any of the features, options or possibilities set out elsewhere in this document, including the first aspect of the invention.

According to a third aspect of the invention we provide a method of joining a first component to a second component, the method comprising the acts of selecting a first component to join to a second component, arranging the first and second component in contact with one another, connecting the first component to an output from a control unit, applying power from a power source through the control unit to the first component to resistance heat at least the first component and allowing the first component to cool joined to the second component,
wherein the power is sourced from a DC power source at a first voltage which provides an input DC power, the DC power source being electrically connected to the control unit, the control unit passing an output DC power of a second voltage to electrical connectors connected to the first component,
characterised in that the control unit includes a converter, a transformer, a rectifier and a bypass circuit, the converter being connected to the primary winding of the transformer and applying a varying current input to the primary winding of the transformer, the secondary winding of the transformer being connected to the rectifier, the rectifier providing the DC output, the bypass circuit connecting the DC input to the DC output prior to the rectifier.

The third aspect of the invention may include any of the features, options, possibilities or acts set out elsewhere in this document, including the first aspect of the invention.

Various embodiments of the invention will now be described, by way of example only, and with reference to the accompanying drawings in which :-
Figure 1 illustrates an electrofusion system;
Figure 2 illustrates an electrofusion system according to one embodiment of the present invention;
Figure 3 illustrates a control unit, for an electrofusion system, according to an alternative embodiment of the present invention; and
Figure 4 illustrates schematically the voltage form at different parts of the electrofusion system of Figure 3.

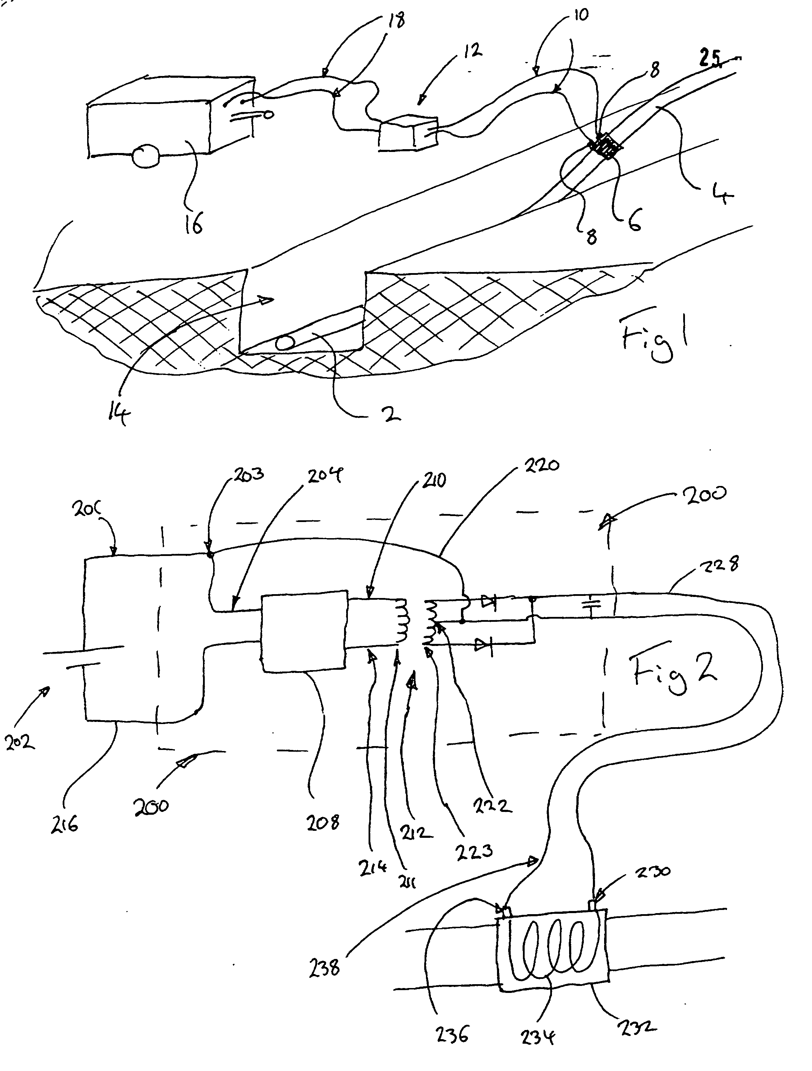

A typical electrofusion operation at a remote location is illustrated in Figure 1. The pipeline 2 which is being formed consists of a series of lengths of pipe which are joined together. As can be seen the pipeline is being extended by the addition of pipe length 4 to it using a collar 6. The collar 6 has two electrical connectors 8 attached to it to receive cables 10 which attach the collar 6 to electrofusion power control unit 12. In present systems the control unit 12 determines the AC voltage applied, current applied and duration of power application for an electrofusion operation so as to ensure that the resistance heating in the collar 6 or other fitting is sufficient to cause controlled melting of the plastics which upon cooling gives a tight seal. A reliable input to the power control unit 12 is essential if the parameters set by the control unit 12 are to actually occur in terms of the voltage/current/duration actually delivered to the collar 6. Electrofusion fittings, such as collar 6, are generally designed to operate successfully with a 40V supply, but invariably use an AC power supply.

As the trench 14 in which the pipeline 2 is being laid is far removed from a mains electrical power source a portable generator 16 is being used. The output from the generator 16 is conveyed to the input side of the control unit 12 by cables 18. As the generator 16 is an internal combustion engine driven generator it is of substantial size and weight, requires a weighty fuel supply and regular maintenance. Although portable, its weight and size place limits on the locations in which it can be used.

The present invention seeks to overcome such problems through the use of an alternative power supply form which uses a DC power source and applies a DC output from the control unit to the electrofusion operation.

The invention is particularly suited to using batteries as the highly portable basic power source. Such batteries are cheaply available, for instance car batteries can be used, and are considerably lighter than the type of generator referred to above. The nature of batteries as a power source also means that a number of battery units can readily be transported separately to a site and then assembled to form a single supply easily. Batteries are also low maintenance, low capital and low running cost units.

Even when using batteries, however, it is important to ensure the power is delivered as efficiently as possible to minimise the number of batteries required and to provide a useful working life before recharging is necessary.

To change the basic output from a battery power source, say 36V, to the operating level electrofusion fittings are designed to operate at, say 40V, it would be possible to use a conventional transformer arrangement to increase the voltage. The limited efficiency of such arrangements, around 80%, and the practical limits placed on the transformer ratings which can be used mean that the current obtained if a 40V output were provided would be incapable of performing electrofusion effectively. The input voltage would also decrease as the batteries drained and hence the output voltage would drop.

The present invention addresses the issue of obtaining an effective current through its handling of the basic power supply and in this way renders the ultimate power output fit for purpose, whilst operating within the constraints of practical transformer ratings.

As illustrated in the first embodiment represented in Figure 2 the power control unit 200 (dotted line) receives an initial input via connector 201 from a 36V DC supply 202, (a battery, offering a current of X). Within the control unit 200 the input is split at location 203 with connection 204 leading into a converter 208 and subsequently via connection 210 to a primary winding 211 of a transformer 212. The return is via connector 214 through the converter 208 and connection 216 to the supply 202.

The converter 208 generates a cyclic changing current through the primary winding 211 of the transformer 212 by one or a variety of methods. For instance, a sine wave AC voltage form may be generated by the application of a frequency or a alternating square wave form may be applied by alternatively directing the current in one direction then the other through the primary winding 211 using a switching system. Either way induction in the secondary winding 223 is generated.

In addition, the split at location 203 also provides a feed via connector 220 to a intermediate location 222 on the secondary winding 223 of the transformer 212, bypassing the primary winding 211. The balance is set such that X1current goes to the primary winding 211 and X2 current goes direct to the secondary winding 223. The induced voltage in the secondary winding 223 is thus boosted by the series connection of the bypass The configuration of the diodes 224, 226 around the secondary winding 223 ensure that the voltage wave form produced is rectified to give a constant DC output 228 from the power control unit. The output 228 is connected to one of the terminals 230 on the electrofusion collar 232, via the internal conductors 234 to the other terminal 236 and with connector 238 completing the circuit.

Configured in this way the output is formed of the current arising from the secondary winding 223 of the transformer 212 and the current which passes through connector 220 to the secondary winding 223. The voltage difference between the connector 201 and ground is Y volts, (the battery 202 voltage), but the potential difference between the connector 220 leading to the secondary wing 223 and the output therefrom, connector 228, is Z and these potentials are additive so giving an overall voltage output of Y+Z. The necessary boost in voltage, whilst maintaining the needed power, is achieved using a practical number and type of batteries, therefore.

In addition to the voltage being substantially increased in this way it should be noted that this system configuration offers substantially higher efficiencies compared with conventional transformer manipulation of a power supply. If the system of the invention is used then only a portion of the voltage is contributed by the primary to secondary winding conversion and hence the rating of the transformer is only limiting on that part. The voltage from the other route around the transformer is not limited by the transformer's rating. Hence a significant current can pass through this route and a larger current can be taken from the battery as a result. This has the consequential effect of increasing the power which can be delivered (300%, for instance) for an equivalently rated transformer when compared with passing everything through the transformer.

By the technique of the present invention, therefore, the voltage can be increased to the needed level relative to commonly available power supply types and yet the current can be maintained at effective levels for electrofusion operations, whilst employing practically rated components. It is also beneficial that the type of power sources under consideration have relatively low voltages when compared to mains supply (less than 25V compared with 110V) and are used at similarly low voltages and hence do not involve voltages at any stage which are subject to tighter regulatory constraints and conditions (the threshold is generally set around 50V).

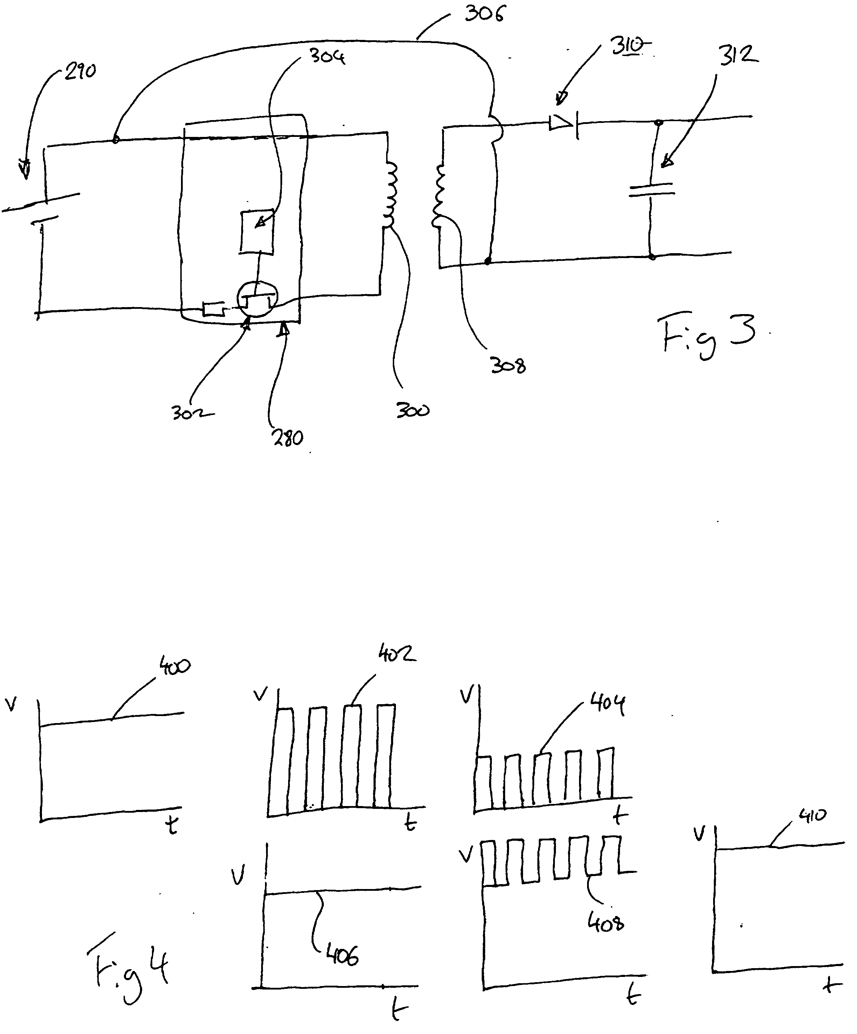

Whilst the types of converter referred to in relation to Figure 2 are possibilities for performing the invention other more beneficial forms exist. In the preferred alternative embodiment illustrated in Figure 3 the control unit is provided with a converter 280 of the "fly back" type. The input from the battery 290 is fed to the primary winding 300 of a transformer, with the input being switched on and off using the transistor 302 controlled by a pulse width modulation control 304 within the control unit 280.

Generating the variation in current in the primary winding of the transformer in this way gives a number of further advantages. Firstly, increasing the pulse width increases the switched on duration for the transistor 302 and hence increases the power outputted to the electrofusion operation. The pulse width can therefore be used to maintain a constant output even when input is varying, for instance due to battery discharge. Furthermore, as the power supply is either on (and contributing to the electrofusion operation) or off, there is no power wastage which has to be dissipated. This again increases the effect life of a battery supply.

As shown in Figure 4, the constant DC input voltage form 400 from the battery is effectively turned on and off to form a DC square wave voltage feed 402 to the primary winding of the transformer. This in turn generates an induced voltage form in the secondary winding which is a DC square wave voltage form 404. The voltage is less than in the primary as a step down transformer configuration is provided.

In the Figure 3 embodiment, the bypass 306 goes to the secondary winding 308 of the transformer. There is no need for the bypass to be introduced at an intermediate location in the secondary winding.

Referring to Figure 4 there is thus also a constant DC voltage feed 406 to the secondary winding to give, in combination with the induced voltage form 404, a boosted voltage level 408.

Returning to Figure 3, the voltage form 408 arising from the secondary winding 308 is rectified by rectifier 310 to give a constant DC voltage form which is then smoothed further by filter 312. Again because a DC voltage form is involved the losses during rectification are small compared with rectification of an AC form to a DC form.

The overall result, Figure 4, is a constant DC voltage form 410 of higher voltage than the input voltage waveform 400. The overall result is that the output voltage is the sum of the input voltage and the converter output (i.e. 36V + 4V to give 40V).

This type of structure allows useful maintenance of the output from the system as the voltage from the battery source declines due to discharge. As the source voltage drops the proportion applied to the transformer increases to maintain the output voltage (by increasing the amount of time current is passed through the primary winding for). This is achieved by the series connection method through the use of an outer control loop to stabilise the output voltage as the input voltage declines by increasing the converter output voltage.

Applying actual numbers to this situation a converter rated at 48W (4V at 12 amp output for instance) connected to a 36V basic power source gives 40V final output with 1.7A passing through the converter and 12A passing through the by-pass. A current of 13.7A is thus drawn from the basic power source (the batteries). When the overall efficiency is considered in (power out / power in) the figures of 480W / 493W give an overall efficiency of 97.4%. The power of the converter is also enormously increased.

This contrasts directly with the situations using the above mentioned example where if a battery supply with voltage X_{feed} were fed to a transformer, with a rating of Q and efficiency of 85%, and an output voltage Xₒᵤₜₚᵤₜ were sought though a direct transformation of the voltage would give a current Iₒᵤₜₚᵤₜ set by formula Iₒᵤₜₚᵤₜ = I_{feed} ((X_{feed} x 0.85)/ Xₒᵤₜₚᵤₜ) with the rating Q limiting I_{feed} as V_{feed} xI_{feed} = Q/0.85 and thus the bigger the voltage increase sought and the larger the impact on the current output, a current already impaired by the rating limiting I_{feed}.

The invention through the large improvement in efficiency minimises the number of batteries required (thereby reducing weight), minimises the ratings required of the transformer and other components needed to give the desired output (again minimising weight) and offers improved working duration through the ability to accommodate decreasing input voltages yet maintain output.

The above mentioned improvements are obtained due to careful design of the system. Significantly the design of the transformer and other components is effected by the application of a high level DC current throughout to the secondary winding. The output from the secondary according to the invention is biassed to high DC compared with 0V in the case of full feed of the current through the transformer. This has been found by the applicant to effect the magnetic properties of the transformer core with potentially earlier saturation and hence current collapse when attempts are made to draw the desired power from the system. To combat this it is desirable to provide an air gap between the cores on which the primary and secondary winding are wound. Variations in the magnetic material (higher saturation points) and level of magnetic material (larger cores) compared with conventional transformer design can also bring improvements. Particular improvements and provided by increasing the frequency of switching of voltage application to the primary winding to the 225kHz to 275kHz range compared with conventional levels around 70kHz.

## Claims

1. An electrofusion power supply, the power supply comprising:-
a DC power source (202) which provides a DC input of a first voltage to a control unit (200), the control unit (200) providing a DC output (228) of a second voltage, the control unit (200) being electrically connected, in use, to electrical connectors (230, 236), the electrical connectors (230, 236) being connected to a first component (232) to be joined to one or more other components (214) by electrofusion,
**characterised in that** the supply further comprises:-
the control unit (200) including a converter (208), a transformer (212), a rectifier and a bypass circuit (220), the converter (208) being connected to the primary winding (211) of the transformer (212) and applying a varying current input to the primary winding (211) of the transformer (212), the secondary winding (223) of the transformer(202) being connected to the rectifier, the rectifier providing the DC output (228), the bypass circuit (220) connecting the DC input to the output prior to the rectifier.

2. A supply according to claim 1 in which the converter (208) includes a switching unit and/or the varying of current input to the primary winding (211) of the transformer (212) is provided due to a switching unit.

3. A supply according to claim 2 in which the switching system has an open state and a closed state, in the closed state the DC input and/or the output from the converter (208) is fed to the primary coil (211) of the transformer(212) and in the open state no input is fed to the primary coil (211) of the transformer.

4. A supply according to claim 2 or claim 3 in which the proportion of the time the switch spends in the closed state controls the output power.

5. A supply according to any of claims 2 to 4 in which the frequency of switching between open and closed states is at least 150kHz.

6. A supply according to any of claims 2 to 5 in which the switch is controlled by and / or is a transistor (302), the transistor (302) being controlled by a pulse width modulation device.

7. A supply according to any preceding claim in which the converter converts the DC input to an AC feed to the primary winding (211) of the transformer (212), for instance a sinusoidal feed and the rectifier provides AC to constant voltage DC rectification.

8. A supply according to any preceding claim in which the converter (208) converts the DC input to an AC feed to the primary winding (211) of the transformer (212) of alternating polarity square wave form and the rectifier provides square wave to constant voltage DC rectification in this embodiment.

9. A supply according to any preceding claim in which the bypass (220) connects the DC input to a connection leading to the secondary winding (223) of the transformer (212) and/or to the secondary winding (223) directly, for instance at an intermediate location (222), particularly the mid-point thereof.

10. A supply according to any of claims 1 to 8 in which the bypass (220) connects the DC input to an intermediate location (222), ideally the mid point, on the secondary winding (223) of the transformer (212).

11. A supply according to any preceding claim in which the rectifier is formed by a first diode connected to one side, ideally the raised potential side, of the secondary winding (223).

12. A supply according to any preceding claim in which the first portion of the DC input current is between 7.5% and 17.5% of the total input DC power and the second portion of the DC input power is between 82.5% and 92.5% of the input DC current.

13. A control unit for electrofusion **characterised in that** the control unit includes a converter (208), a transformer (212), a rectifier, a bypass circuit (220) and circuitry, the circuitry connecting a DC input to the converter (208), connecting the varying current output from the converter (208) to a primary winding (211) of the transformer (212), connecting the output from the secondary winding (223) of the transformer (212) to a rectifier, connecting the output from the rectifier to the output, the bypass circuit (220) connecting the DC input to the DC output prior to the rectifier.

14. A method of joining a first component (6) to a second component (2, 4), the method comprising the acts of selecting a first component (6) to join to a second component (2, 4), arranging the first and second component in contact with one another, connecting the first component (6) to an output from a control unit (200), applying power from a power source (202) through the control (200) unit to the first component (6) to resistance heat at least the first component (6) and allowing the first component (6) to cool joined to the second component (2, 4),
wherein the power is sourced from a DC power source (202) at a first voltage which provides an input DC power, the DC power source being electrically connected to the control unit (200), the control unit (200) passing an output DC power of a second voltage to electrical connectors connected to the first component,
**characterised in that** the control unit (200) includes a converter (208) , a transformer(212) , a rectifier and a bypass circuit (220), the converter (208) being connected to the primary winding (211) of the transformer (212) and applying a varying current input to the primary winding (211) of the transformer (212), the secondary winding (223) of the transformer (212) being connected to the rectifier, the rectifier providing the DC output (228), the bypass circuit (220) connecting the DC input to the DC output (220) prior to the rectifier.

## Patentansprüche

1. Schmelzschweiß-Stromversorgung, welche umfasst:
eine Gleichstrom-Energiequelle (202), welche einer Steuereinheit (200) einen Eingangs-Gleichstrom mit einer ersten Spannung zur Verfügung stellt, wobei die Steuereinheit (200) einen Ausgangs-Gleichstrom (228) einer zweiten Spannung zur Verfügung stellt und die Steuereinheit (200) im Betrieb mit zwei elektrischen Anschlussklemmen (230, 236) elektrisch verbunden ist, wobei die elektrischen Anschlussklemmen (230, 236) mit einer ersten Komponente (232) verbunden sind, die mit einer oder mehreren weiteren Komponenten (214) durch Schmelzschweißen zusammengefügt werden soll,
**dadurch gekennzeichnet, dass** die Versorgung außerdem umfasst, dass
die Steuereinheit (200) einen Wandler (208), einen Transformator (212), einen Gleichrichter und einen Nebenschlusskreis (220) aufweist, wobei
der Wandler (208) mit der Primärwicklung (211) des Transformators (212) verbunden ist und einen sich verändernden Eingangsstrom auf die Primärwicklung (211) des Transformators (212) schickt,
die Sekundärwicklung (223) des Transformators (212) mit dem Gleichrichter verbunden ist,
der Gleichrichter den Ausgangs-Gleichstrom (228) zur Verfügung stellt, und
der Nebenschlusskreis (220) den Eingangs-Gleichstrom vor dem Gleichrichter an die Ausgangsleitung überstellt.

2. Versorgung nach Anspruch 1, bei welcher der Wandler (208) eine Schalteinheit aufweist und/oder das Verändern des Eingangsstroms für die Primärwicklung (211) des Transformators (212) durch das Arbeiten einer Schalteinheit bewerkstelligt wird.

3. Versorgung nach Anspruch 2, bei welcher das Schaltsystem einen Offen-Zustand und einen Geschlossen-Zustand hat, wobei in dem Geschlossen-Zustand der Eingangsund/oder der Ausgangs-Gleichstrom von dem Wandler (208) zu der Primärwicklung (211) des Transformators (212) geleitet wird und in dem Offen-Zustand keine Eingangsleistung zu der Primärwicklung (211) des Transformators geleitet wird.

4. Versorgung nach Anspruch 2 oder 3, bei welcher der Zeitanteil, den der Schalter in dem Geschlossen-Zustand verweilt, die Ausgangsleistung steuert.

5. Versorgung nach einem der Ansprüche 2 bis 4, bei welcher die Frequenz, mit der zwischen dem Offen- und dem Geschlossen-Zustand hin- und hergeschaltet wird, wenigstens 150 kHz beträgt.

6. Versorgung nach einem der Ansprüche 2 bis 5, bei welcher der Schalter durch einen Transistor (302) gesteuert wird und/oder ein Transistor (302) ist, wobei der Transistor (302) durch eine Pulsbreiten-Modulations-Einrichtung gesteuert ist.

7. Versorgung nach einem der vorhergehenden Ansprüche, bei welcher der Wandler den Eingangs-Gleichstrom in einen Wechselstrom-Speisestrom für die Primärwicklung (211) des Transformators (212) umformt, beispielsweise in einen sinusförmigen Speisestrom, und der Gleichrichter eine Gleichrichtung eines Wechselstroms zu einem Gleichstrom mit konstanter Spannung bewerkstelligt.

8. Versorgung nach einem der vorhergehenden Ansprüche, bei welcher der Wandler (208) den Eingangs-Gleichstrom in einen Wechselstrom-Speisestrom für die Primärwicklung (211) des Transformators (212) mit einer Rechteckwellenform wechselnder Polarität umformt und der Gleichrichter bei dieser Ausführung eine Gleichrichtung der Rechteckwelle zu einem Gleichstrom konstanter Spannung bewerkstelligt.

9. Versorgung nach einem der vorhergehenden Ansprüche, bei welcher der Nebenschluss (220) den Eingangs-Gleichstrom an eine Verbindung, welche zu der Sekundärwicklung (223) des Transformators (212) führt, und/oder direkt an die Sekundärwicklung (223) überstellt, beispielsweise an einer Zwischenstelle (222), insbesondere dem Wicklungs-Mittelpunkt.

10. Versorgung nach einem der Ansprüche 1 bis 8, bei welcher der Nebenschluss (220) den Eingangs-Gleichstrom an eine Zwischenstelle (222), idealerweise dem Mittelpunkt, der Sekundärwicklung (223) des Transformators (212) überstellt.

11. Versorgung nach einem der vorhergehenden Ansprüche, bei welcher der Gleichrichter durch eine erste Diode gebildet ist, die mit einer Seite, idealerweise mit der Seite mit erhöhtem Potential, der Sekundärwicklung (223) verbunden ist.

12. Versorgung nach einem der vorhergehenden Ansprüche, bei welcher der erste Abschnitt des Eingangs-Gleichstroms zwischen 7,5 % und 17,5 % der Gesamt-Gleichstrom-Eingangsleistung liegt und der zweite Abschnitt der Eingangs-Gleichstromleistung zwischen 82,5 % und 92,5 % des Gleichstrom-Eingangsstroms liegt.

13. Steuereinheit zum Schmelzschweißen, **dadurch gekennzeichnet, dass** die Steuereinheit einen Wandler (208), einen Transformator (212), einen Gleichrichter, einen Nebenschlusskreis (220) und eine Schaltungsanordnung aufweist, wobei die Schaltungsanordnung einen Eingangs-Gleichstrom an den Wandler (208) überstellt, den sich verändernden Ausgangs-Strom von dem Wandler (208) an eine Primärwicklung (211) des Transformators (212) überstellt und die Ausgangsleitung der Sekundärwicklung (223) des Transformators (212) mit einem Gleichrichter verbindet und den Ausgangsstrom des Gleichrichters an die Ausgangsleitung überstellt, wobei der Nebenschlusskreis (220) den Eingangs-Gleichstrom vor dem Gleichrichter an die Ausgangsleitung überstellt.

14. Verfahren zum Zusammenfügen einer ersten Komponente (6) mit einer zweiten Komponente (2, 4), wobei das Verfahren folgende Schritte umfasst:
Auswählen einer ersten Komponente (6), die mit einer zweiten Komponente (2, 4) zusammengefügt werden soll,
Anordnen der ersten und der zweiten Komponente unter gegenseitiger Berührung,
Verbinden der ersten Komponente (6) mit einem Ausgang einer Steuereinheit (200),
Zuführen von Energie von einer Energiequelle (202) über die Steuereinheit (200) an die ersten Komponente (6), um wenigstens die erste Komponente (6) durch Widerstandsheizen zu erhitzen, und
Abkühlen lassen der ersten Komponente (6) in mit der zweiten Komponente (2, 4) zusammengefügten Zustand, wobei
die Energie mit einer ersten Spannung von einer Gleichstrom-Energiequelle (202) bereitgestellt wird, welche eine Eingangs-Gleichstrom-Energie zur Verfügung stellt, wobei die Gleichstrom-Energiequelle elektrisch mit der Steuereinheit (200) verbunden ist und die Steuereinheit (200) eine Ausgangs-Gleichstrom-Energie mit einer zweiten Spannung auf elektrische Anschlussklemmen durchleitet, welche mit der ersten Komponente verbunden sind,
**dadurch gekennzeichnet, dass**
die Steuereinheit (200) einen Wandler (208), einen Transformator (212), einen Gleichrichter und einen Nebenschlusskreis (220) aufweist, wobei der Wandler (208) mit der Primärwicklung (211) des Transformators (212) verbunden ist und einen sich verändernden Eingangs-Strom an die Primärwicklung (211) des Transformators (212) überstellt, die Sekundärwicklung (223) des Transformators (212) mit dem Gleichrichter verbunden ist, der Gleichrichter den Ausgangs-Gleichstrom (228) zur Verfügung stellt und der Nebenschluss-Schaltkreis (220) den Eingangs-Gleichstrom vor dem Gleichrichter mit dem Ausgangs-Gleichstrom (228) verbindet.

## Revendications

1. Source d'alimentation en courant pour électrofusion, cette source d'alimentation comprenant :
une source de courant continu (202) qui fournit une entrée de courant continu d'une première tension à une unité de commande (200), l'unité de commande (200) fournissant une sortie de courant continu (228) d'une deuxième tension, l'unité de commande (200) étant électriquement connectée, en service, à des connecteurs électriques (230, 236), les connecteurs électriques (230, 236) étant connectés à un premier composant (232) à assembler à un ou plusieurs autres composants (214) par électrofusion,
**caractérisé en ce que** l'alimentation comprend en outre :
l'unité de commande (200) comprenant un convertisseur (208), un transformateur (212), un redresseur et un circuit de dérivation (220), le convertisseur (208) étant connecté à l'enroulement primaire (211) du transformateur (212) et appliquant une entrée de courant variant à l'enroulement primaire (211) du transformateur (212), l'enroulement secondaire (223) du transformateur (202) étant connecté au redresseur, le redresseur fournissant la sortie de courant continu (228), le circuit de dérivation (220) reliant l'entrée de courant continu à la sortie avant le redresseur.

2. Alimentation selon la revendication 1, **caractérisée en ce que** le convertisseur (208) comprend une unité de commutation et/ou la variation de l'entrée de courant appliqué à l'enroulement primaire (211) du transformateur (212) est assurée grâce à une unité de commutation.

3. Alimentation selon la revendication 2 **caractérisée en ce que** le système de commutation présente un état ouvert et un état fermé, dans l'état fermé l'entrée de courant continu et/ou la sortie du convertisseur (208) est fournie à la bobine primaire (211) du transformateur (212) et dans l'état ouvert aucune entrée n'est fournie à la bobine primaire (211) du transformateur.

4. Alimentation selon la revendication 2 ou la revendication 3, **caractérisée en ce que** la puissance de sortie est fonction de la durée du temps pendant lequel le commutateur reste à l'état fermé.

5. Alimentation selon l'une quelconque des revendications 2 à 4, **caractérisée en ce que** la fréquence de commutation entre les états ouvert et fermé est d'au moins 150 kHz.

6. Alimentation selon l'une quelconque des revendications 2 à 5, **caractérisée en ce que** le commutateur est commandé par et/ou est un transistor (302), le transistor (302) étant commandé par un dispositif de modulation de largeur d'impulsion.

7. Alimentation selon l'une quelconque des revendications précédentes, **caractérisée en ce que** le convertisseur transforme l'entrée de courant continu en alimentation de courant alternatif à l'enroulement primaire (211) du transformateur (212), par exemple, une alimentation sinusoïdale et le redresseur assure un redressement du courant alternatif en courant continu à tension constante.

8. Alimentation selon l'une quelconque des revendications précédentes, **caractérisée en ce que** le convertisseur (208) convertit l'entrée de courant continu en alimentation de courant alternatif à l'enroulement primaire (211) du transformateur (212) de la forme d'onde carrée à polarité alternée et le redresseur assure le redressement d'une onde carrée en courant continu à tension constante dans le présent mode de réalisation.

9. Alimentation selon l'une quelconque des revendications précédentes, **caractérisée en ce que** la dérivation (220) connecte l'entrée de courant continu à une connexion conduisant à l'enroulement secondaire (223) du transformateur (212) et/ou à l'enrouelement secondaire (223) directement, par exemple, à un emplacement intermédiaire (222) particulièrement au point situé au milieu entre ces deux derniers.

10. Alimentation selon l'une quelconque des revendications 1 à 8, **caractérisée en ce que** la dérivation (220) connecte l'entrée de courant continu à un emplacement intermédiaire (222), de manière idéale, au point situé au milieu entre ces derniers l'enroulement secondaire (223) du transformateur (212)

11. Alimentation selon l'une quelconque des revendications précédentes, **caractérisée en ce que** le redresseur est formé par une première diode connectée à un côté, de manière idéale, au côté au potentiel élevé, de l'enroulement secondaire (223).

12. Alimentation selon l'une quelconque des revendications précédentes, **caractérisée en ce que** la première partie de l'entrée de courant continu se situe entre 7,5% et 17,5% de l'entrée de courant continu total et la deuxième partie de l'entrée de courant continu se situe entre 82,5 % et 92,5% de l'entrée de courant continu.

13. Unité de commande pour électrofusion **caractérisée en ce que** l'unité de commande comprend un convertisseur (208), un transformateur (212), un redresseur, un circuit de dérivation (220) et un ensemble de circuits, le circuit connectant une entrée de courant continu au convertisseur (208), connectant la sortie de courant variant depuis le convertisseur (208) à un enroulement primaire (211) du transformateur (212), connectant la sortie depuis l'enroulement secondaire (223) du transformateur (212) à un redresseur, connectant la sortie depuis le redresseur à la sortie, le circuit de dérivation (220) connectant l'entrée de courant continu à la sortie de courant continu avant le redresseur.

14. Procédé d'assemblage d'un premier composant (6) à un deuxième composant (2, 4), ce procédé consistant à sélectionner un premier composant (6) pour l'assembler à un deuxième composant (2,4), disposer les premier et deuxième composants en contact l'un avec l'autre, connecter le premier composant (6) à une sortie à partir d'une unité de commande (200), appliquer un courant à partir d'une source de courant (202) via l'unité de commande (200) au premier composant (6) pour chauffer par la résistance au moins le premier composant (6) et permettre au premier composant (6) de refroidir une fois assemblé au deuxième composant (2,4),
où le courant provient d'une source de courant continu (20) à une première tension qui fournit une entrée de courant continu, la source de courant continu étant électriquement connectée à l'unité de commande (200), l'unité de commande (200) transmettront une sortie de un courant continu d'une deuxième tension à des connecteurs électriques connectés au premier composant,
**caractérisé en ce que** l'unité de commande (200) comprend un convertisseur (208), un transformateur (212), un redresseur et un circuit de dérivation (220), le convertisseur (208) étant connecté à l'enroulement primaire (211) du transformateur (212) et appliquant une entrée de courant variant à l'enroulement primaire (211) du transformateur (212), l'enroulement secondaire (223) du transformateur (212) étant connecté au redresseur, le redresseur fournissant la sortie de courant continu (228), le circuit de dérivation (220) reliant l'entrée de courant continu à la sortie de courant continu (220) avant le redresseur.
